Europäisches Patentamt

European Patent Office

Office européen des brevets

(11) Veröffentlichungsnummer: **0 107 790**
**A2**

(12) # EUROPÄISCHE PATENTANMELDUNG

(21) Anmeldenummer: 83109567.4

(22) Anmeldetag: 26.09.83

(51) Int. Cl.³: **H 04 N 3/15**
**H 01 L 27/14**

(30) Priorität: 29.09.82 DE 3236146

(43) Veröffentlichungstag der Anmeldung:
09.05.84 Patentblatt 84/19

(84) Benannte Vertragsstaaten:
AT BE CH DE FR GB IT LI LU NL SE

(71) Anmelder: SIEMENS AKTIENGESELLSCHAFT
Berlin und München Wittelsbacherplatz 2
D-8000 München 2(DE)

(72) Erfinder: Herbst, Heiner, Dr.
Anechostrasse 29A
D-8000 München 82(DE)

(72) Erfinder: Koch, Rudolf, Dr.
Gördelerstrasse 18
D-8025 Unterhaching(DE)

(54) Zweidimensionaler Halbleiter-Bildsensor und Verfahren zu seinem Betrieb.

(57) Zweidimensionaler Halbleiter-Bildsensor, bei dem Zeilenleitungen (L1), die über ein Vertikal-Schieberegister (VSR) auswählbar sind, zur Ansteuerung von ersten Auswahltransistoren (T11) der Sensorelemente (D11) dienen. Dabei sind Spaltenleitungen (SP1) über Schalter (ST1), die von Ausgängen eines horizontalen Schieberegisters (HSR) sequentiell ansteuerbar sind, mit einer Ausleseleitung (AL) verbunden. Angestrebt wird, den Signal-Rausch-Abstand zu erhöhen. Erreicht wird das durch zweite Auswahltransistoren (T11') der Sensorelemente, die zu den ersten (T11) in Serie geschaltet sind, durch Zeilenauswahltransistoren (ZT1), die die Zeilenleitungen (L1) mit den Ausgängen des Vertikal-Schieberegisters (VSR) verbinden und durch eine differenzbildende Stufe (CDS), die der Ausleseleitung (AL) nachgeschaltet ist. Der Anwendungsbereich umfaßt Fernsehaufnahmegeräte.

FIG 1

EP 0 107 790 A2

SIEMENS AKTIENGESELLSCHAFT               Unser Zeichen
Berlin und München                       VPA
                                         82 P 1 9 0 3 E

Zweidimensionaler Halbleiter-Bildsensor und Verfahren zu
seinem Betrieb.


Die Erfindung bezieht sich auf einen zweidimensionalen
Halbleiter-Bildsensor nach dem Oberbegriff des Patentanspruchs 1 und auf ein Verfahren zu seinem Betrieb.

Ein Halbleiter-Bildsensor dieser Art ist aus dem Datenblatt "Reticon Solid-State Image Sensor Arrays" der Reticon Corp., Mountain View, California, USA, bekannt. Der
Erfindung liegt die Aufgabe zugrunde, den Signal-Rausch-
Abstand bei einem Sensor der eingangs genannten Art zu
erhöhen. Das wird erfindungsgemäß durch eine Ausbildung
des Sensors nach dem kennzeichnenden Teil des Patentanspruchs 1 erreicht.

Der mit der Erfindung erzielbare Vorteil liegt insbesondere darin, daß sowohl von der Ausleseleitung als auch
von den Spaltenleitungen herrührende Rauschanteile unterdrückt werden können.

Die Ansprüche 2 bis 4 betreffen bevorzugte Ausgestaltungen und Weiterbildungen der Erfindung, während der Anspruch 5 auf ein bevorzugtes Verfahren zum Betrieb des
Halbleiter-Bildsensors nach der Erfindung gerichtet ist.

Die Erfindung wird nachfolgend anhand der Zeichnung näher
erläutert. Dabei zeigt:

Fig. 1 das Prinzipschaltbild eines nach der Erfindung ausgebildeten, zweidimensionalen Halbleiter-Bildsensors,
St 1 Wi - 23.09.1982

Fig. 2 das Prinzipschaltbild einer in Serie zum Ausgang
der Ausleseleitung angeordneten differenzbildenden Stufe und

Fig. 3 Spannungs-Zeit-Diagramme zur Erläuterung von Fig.1.


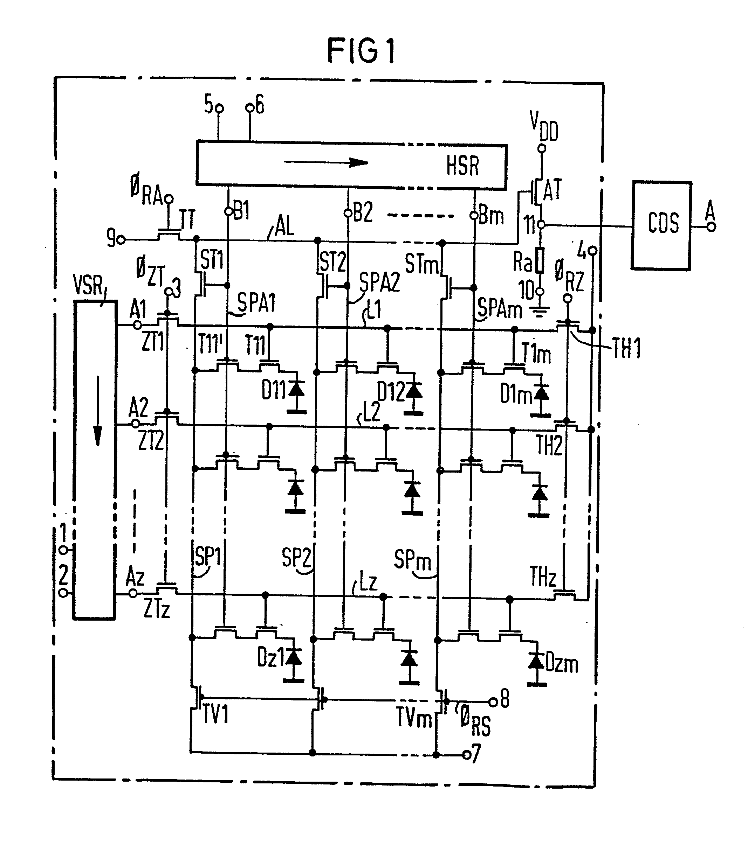

In Fig. 1 ist eine monolithisch integrierbare Schaltung
mit einem zweidimensionalen Halbleiter-Bildsensor dargestellt, der aus Fotodioden bestehende, in Zeilen und
Spalten angeordnete Sensorelemente aufweist. Die in der
ersten Zeile liegenden Fotodioden sind mit D11 bis D1m
bezeichnet. In Serie zu diesen sind jeweils die Schaltstrecken von ersten Auswahltransistoren T11 bis T1m vorgesehen, deren Gates mit einer gemeinsamen Zeilenleitung
L1 verbunden sind. L1 ist über die Schaltstrecke eines
Zeilenauswahltransistors ZT1 mit einem Parallelausgang
A1 eines Vertikal-Schieberegisters VSR beschaltet, welches Taktimpulseingänge 1 und 2 aufweist. Den weiteren
Fotodioden und ihren ersten Auswahltransistoren sind in
analoger Weise Zeilenleitungen L2 bis Lz zugeordnet, die
über Zeilenauswahltransistoren ZT2 bis ZTz an die Parallelausgänge A2 bis Az von VSR gelegt sind. Die Gates
sämtlicher Zeilenauswahltransistoren ZT1 bis ZTz sind an
einen Anschluß 3 gelegt, der mit einer Taktspannung $\emptyset_{ZT}$
beschaltet ist. Jede der Zeilenleitungen L1 bis Lz ist
ferner über einen Schalttransistor TH1 bis THz mit einem
Schaltungspunkt 4 verbunden, der mit einem Bezugspotential beschaltet ist. Die Gates von TH1 bis THz haben
einen gemeinsamen Anschluß, der mit einer Taktspannung
$\emptyset_{RZ}$ beschaltet ist. Die unteren Anschlüsse aller Fotodioden D11 usw. sind ebenfalls mit dem Bezugspotential beschaltet.


In Serie zu den ersten Auswahltransistoren der Sensorelemente sind jeweils zweite Auswahltransistoren vorgesehen,
wobei die in den Sensorelementen gebildeten, belichtungsabhängigen Sensorsignale jeweils über die Serienschaltung beider Auswahltransistoren an eine sog. Spaltenleitung übertragen werden. In Fig. 1 ist beispielsweise D11 über einen ersten Auswahltransistor T11 und einen zweiten Auswahltransistor T11' mit einer Spaltenleitung SP1 verbunden. Ebenso sind die übrigen Sensorelemente der ersten Spalte bis einschließlich Dz1 jeweils über die Serienschaltungen zweier Auswahltransistoren mit SP1 verbunden. Die Spaltenleitung SP1 ist ihrerseits über einen Spaltenauswahltransistor ST1 mit einer Ausleseleitung AL verbunden, die an das Gate eines Ausgangstransistors AT geführt ist. Das Gate des Spaltenauswahltransistors ST1 ist zusammen mit den Gates der zweiten Auswahltransistoren, die den Sensorelementen der ersten Spalte zugeordnet sind, über eine Spaltenauswahlleitung SPA1 an den ersten Parallelausgang B1 eines Horizontal-Schieberegisters HSR geschaltet, das mit Taktimpulseingängen 5 und 6 versehen ist.

In analoger Weise ist den Sensorelementen der zweiten Spalte eine mit der Ausleseleitung AL über einen Spaltenauswahltransistor ST2 verbundene Spaltenleitung SP2 zugeordnet, wobei das Gate von ST2 zusammen mit den Gates der zweiten Auswahltransistoren der Sensorelemente dieser Spalte über eine Spaltenauswahlleitung SPA2 mit dem zweiten Parallelausgang B2 von HSR verbunden ist. Schließlich sind auch die übrigen Spalten der Sensorelemente, z. B. D1m bis Dzm, über ihnen zugeordnete Spaltenleitungen, z. B. SPm, und Spaltenauswahltransistoren, z. B. STm, mit der Ausleseleitung AL verbunden, wobei die zugehörigen zweiten Auswahltransistoren und Spaltenauswahltransistoren, z. B. STm, jeweils über zugeordnete Spaltenauswahlleitungen, z. B. SPAm, von einem Parallelausgang, z. B. Bm, von HSR angesteuert werden. Die Spaltenleitungen SP1 bis SPm sind über die Schaltstrecken von Transistoren TV1 bis TVm mit einem Schaltungspunkt 7 verbunden, der auf einem Referenzpotential liegt. Die Gates von TV1 bis TVm sind über einen gemeinsamen Anschluß 8 mit einer Taktspannung $\emptyset_{RS}$ belegt. Die Ausleseleitung AL ist über die Schaltstrecke eines Transistors TT mit einem Schaltungspunkt 9 verbunden, der vorzugsweise auf dem gleichen Referenzpotential liegt, wie der Schaltungspunkt 7. Das Gate von TT liegt dabei an einem mit einer Taktspannung $\emptyset_{RA}$ beschalteten Anschluß.

Der Ausgangstransistor AT liegt mit seinem Drainanschluß an der Versorgungsspannung $V_{DD}$, während sein Sourceanschluß 11 über ein Lastelement Ra an einen Schaltungspunkt 10 geführt ist, der mit dem Bezugspotential beschaltet ist. Der Drainanschluß 11 von AT, der den Ausgang der Ausleseleitung AL darstellt, ist mit dem Eingang einer differenzbildenden Stufe CDS beschaltet, deren Ausgang A den Sensorausgang bildet.

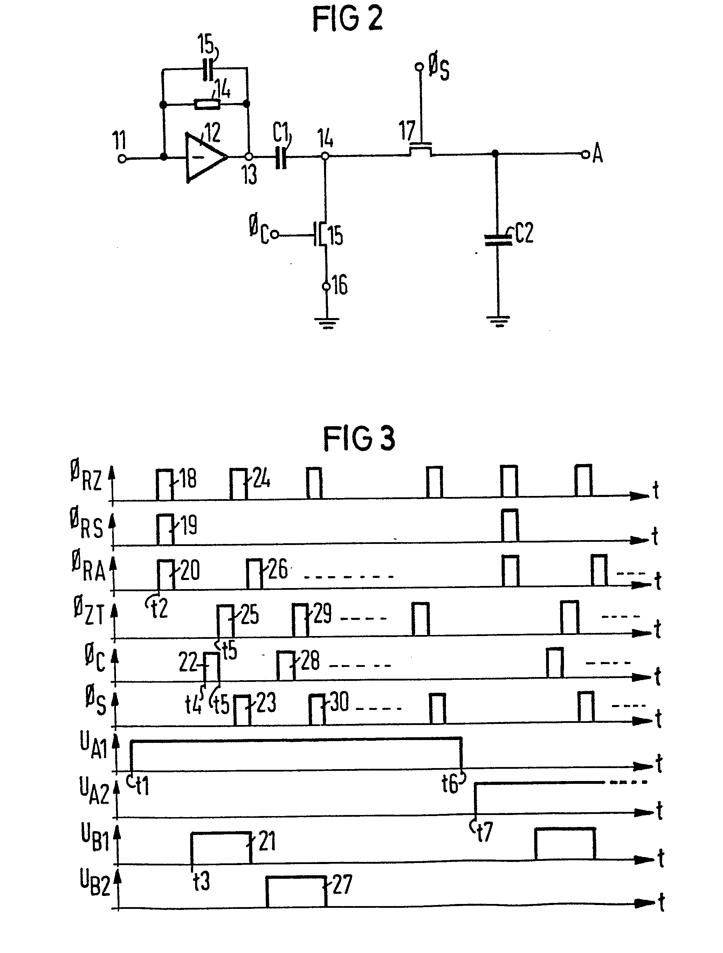

Fig. 2 zeigt das Schaltschema einer zweckmäßigen Ausführungsform der differenzbildenden Stufe CDS. Bei dieser gelangt man vom Eingang 11 zu einem Vorverstärker 12, dessen Ausgang 13 über die Parallelschaltung eines Widerstandes 14 und einer Kapazität 15 an den Eingang 11 rückgekoppelt ist. In Serie zum Ausgang 13 liegt eine Kapazität C1, deren vom Verstärkerausgang abgewandter Anschluß 14 über einen Schalttransistor 15 mit einem auf Bezugspotential liegenden Schaltungspunkt 16 verbunden ist. Das Gate des Schalttransistors 15 ist mit einer Taktspannung $\emptyset_C$ beschaltet. Der Anschluß 14 ist über die Schaltstrecke eines Schalttransistors 17 mit dem ersten Anschluß einer Kapazität C2 beschaltet, deren zweiter Anschluß auf Bezugspotential liegt. Der erste Anschluß von C2 bildet gleichzeitg den Ausgang A der Stufe CDS und damit den Ausgang des Bildsensors. Die Schaltungsteile 17 und C2 bilden eine Abtast- und Haltestufe. Dabei ist das Gate von 17 mit einer Taktspannung $\emptyset_S$ beschaltet.

Eine differenzbildende Stufe der vorstehend beschriebenen
Art ist z. B. dem Buch von P. G. Jespers u. a. "Solid
State Imaging" aus der Reihe "NATO Advanced Study Institutes", Series E., No. 16, erschienen 1976 im Verlag Noordhoff International Publishing, Leyden, auf den Seiten 535
bis 559, insb. Fig. 9, zu entnehmen. Eine solche Stufe,
die ähnlich aufgebaut ist, kann dem IEEE Journal of Solid-
State Circuits, Vol. SC-9, No. 1, Februar 1974, Seiten
1 bis 13, insb. Fig. 5, entnommen werden.

Die Schieberegister VSR und HSR sind vorzugsweise als
zweiphasige, dynamische, rückgekoppelte Schieberegister
ausgebildet. In VSR wird eine logische "1" in Abhängigkeit von zwei über die Eingänge 1, 2 zugeführten Taktimpulsspannungen von Stufe zu Stufe übertragen. Die Übertragungsrichtung ist durch einen Pfeil gekennzeichnet.
Es wird davon ausgegangen, daß zu einem bestimmten Zeitpunkt t1 eine logische "1" am Ausgang A1 der ersten Stufe von VSR anliegt, wobei die an A1 auftretende Spannung
mit $U_{A1}$ bezeichnet ist. Nach dem Auftreten der nächstfolgenden Taktimpulse an den Eingängen 1 und 2 hat sich dann
die logische "1" soweit in Pfeilrichtung verschoben, daß
sie am zweiten Parallelausgang A2 als Spannung $U_{A2}$ anliegt.
Dieses Weiterschalten der "1" setzt sich solange fort,
bis der Ausgang $A_z$ der letzten Stufe mit einer Spannung
belegt ist. Die nächstfolgenden Taktimpulse an 1 und 2
bringen dann die logische "1" wieder an den Ausgang A1
der ersten Stufe. Die Ausgänge der jeweils nicht mit der
logischen "1" belegten Stufen liegen auf dem Potential
"0".

Das Schieberegister HSR wird in gleicher Weise mittels
zweier den Eingängen 5 und 6 zugeführter Taktimpulsspannungen betrieben. Dabei verschiebt sich eine logische "1"
in Pfeilrichtung im Takt der Taktimpulsspannung, was zu
Spannungen $U_{B1}$, $U_{B2}$ usw. an den Parallelausgängen B1, B2
usw. führt.

Durch das Auftreten der Spannung $U_{A1}$ zum Zeitpunkt t1 wird die erste Zeile von Sensorelementen, d. h. D11 bis D1m, für das Auslesen ausgewählt. Allerdings ist ZT1 zunächst noch gesperrt. Danach werden zum Zeitpunkt t2 die Zeilenleitungen mittels des Taktimpulses 18 von $\emptyset_{RZ}$ auf Bezugspotential gesetzt, während die Spaltenleitungen und die Ausleseleitung mittels der Taktimpulse 19 und 20 der Spannungen $\emptyset_{RS}$ und $\emptyset_{RA}$ jeweils auf ein Referenzpotential zurückgesetzt werden. Es folgt ein Impuls 21 der Spannung $U_{B1}$ (t3), der die Leitung SPA1 auswählt und über sie sämtliche zweiten Auswahltransistoren T11' usw. der ersten Sensorspalte sowie den Spaltenauswahltransistor ST1 leitend schaltet, so daß SP1 mit AL verbunden wird. Der Momentanwert des Rauschens auf der Spaltenleitung SP1 und der Ausleseleitung AL sowie die durch die Transistoren T11' usw. der ersten Sensorspalte und den Transistor ST1 erfolgten Störspannungseinkopplungen werden durch den Impuls 22 (t4) von $\emptyset_C$, der den Schalttransistor 15 leitend schaltet, mit negativem Vorzeichen in der Kapazität C1 gespeichert. Anschließend, d. h. zum Zeitpunkt t5, werden alle ersten Auswahltransistoren T11...T1m der ausgewählten Zeile mittels des Impulses 25 von $\emptyset_{ZT}$ leitend geschaltet. Dabei wird das Sensorelement D11, das durch den Kreuzungspunkt der ausgewählten Leitungen L1 und SPA1 bestimmt ist, ausgelesen. Das ausgelesene Sensorsignal, das ebenfalls mit dem Momentanwert des Rauschens auf SP1 und AL sowie mit den genannten Störspannungseinkopplungen behaftet ist, wird nach dem Sperren des Schalttransistors 15 (Fig. 2) zum Zeitpunkt t5 dem zuvor in C1 gespeicherten Signal mit positivem Vorzeichen überlagert, so daß sich am Schaltungspunkt 14 ein von den genannten Rauschanteilen und Störspannungseinkopplungen befreites Sensorsignal als Differenz der beiden nacheinander ausgelesenen Signale ergibt. Durch den Impuls 23 von $\emptyset_S$ wird der so erhaltene Signalwert über den Transistor 17 auf die Kapazität C2 übertragen und dort gespeichert, so daß er bei A abgreifbar ist. Durch den Taktimpuls 24 von $\emptyset_{RZ}$ wird nach

Beendigung des Taktimpulses 25 von $\emptyset_{ZT}$ erreicht, daß eine Störspannungseinkopplung über den Transistor T11 auf die Leitung SP1 entsteht, die die beim Leitendschalten desselben Transistors zum Zeitpunkt t5 entstandene Störspannungseinkopplung zum großen Teil kompensiert, so daß diese Einkopplungen vernachlässigt werden können.

Vor dem Auslesen des nächsten Sensorelementes D12 der ersten Zeile werden die Zeilenleitungen mittels des Impulses 24 wieder auf Bezugspotential gesetzt und die Ausleseleitung mittels des Impulses 26 wieder auf das Bezugspotential geschaltet. Neben der noch immer ausgewählten Leitung L1 wird nun durch den Impuls 27 von $U_{B2}$ die Leitung SPA2 ausgewählt. Die Impulse 28 bis 30 bewirken in der bereits beschriebenen Weise die Übertragung des von den Rauschanteilen auf SP2 und LA sowie den Störspannungseinkopplungen der beteiligten Schalttransistoren befreiten Sensorsignals aus dem Sensorelement D12 auf die Kapazität C2 und damit auf den Ausgang A.

In derselben Weise werden die weiteren Sensorelemente der ersten Zeile bis zum Element D1m sequentiell ausgelesen. Danach wird die Spannung $U_{A1}$ von Ausgang A1 abgeschaltet (t6) und der nächste Parallelausgang A2 vom VSR mit der Spannung $U_{A2}$ beaufschlagt (t7). Anschließend wiederholt sich der oben beschriebene sequentielle Auslesevorgang für die Sensorelemente der zweiten Zeile. In analoger Weise werden auch die Sensorelemente der übrigen Bildsensorzeilen ausgelesen. Der komplette Auslesevorgang des gesamten Bildsensors wiederholt sich periodisch.

Das vorstehend beschriebene Ausleseverfahren für den Bildsensor nach der Erfindung erlaubt eine weitgehende rauscharme und störungsfreie Auslesung der Sensorsignale auch bei größeren Zeilenzahlen und Spaltenzahlen, obwohl in diesem Fall das Rücksetzrauschen der Spaltenleitungen SP1 usw. und der Ausleseleitung AL wegen der entsprechend vergrös-

0107790

serten Leitungslängen und der damit verbundenen größeren Leitungskapazitäten von größeren Rauschladungen herrührt. Durch die Erfindung werden diese Rauschladungen bei der Differenzbildung bezüglich der jeweils unmittelbar nacheinander ausgelesene Signale in der Stufe CDS weitgehend kompensiert.

Der erste und zweite Auswahltransistor, z. B. T11 und T11', der einzelnen Sensorelemente, können platzsparend zu einem Dual-Gate-Transistor zusammengefaßt werden. Dabei kann das Gate von T11' aus einer ersten Schicht polykristallinen Siliziums gebildet sein und das Gate von T11 aus einer zweiten solchen Schicht.

6 Patentansprüche
3 Figuren

VPA 82 P 1 9 0 3 E

<u>Patentansprüche</u>

1. Zweidimensionaler Halbleiter-Bildsensor mit auf einem dotierten Halbleiterkörper in Zeilen und Spalten angeordneten Sensorelementen, bei dem Zeilenleitungen, die über zugeordnete Parallelausgänge eines Vertikal-Schieberegisters auswählbar sind, zur Ansteuerung von ersten Auswahltransistoren der Sensorelemente dienen, über die in diesen gebildete, belichtungsabhängige Sensorsignale auf Spaltenleitungen übertragen werden und bei dem letztere über Schalter, die von Parallelausgängen eines horizontalen Schieberegisters ansteuerbar sind, nacheinander mit einer Ausleseleitung verbindbar sind, die einen Ausgang zum sequentiellen Auslesen der Sensorsignale aufweist, d a d u r c h  g e k e n n z e i c h n e t , daß die Parallelausgänge des Horizontal-Schieberegisters zusätzlich zur spaltenweisen Ansteuerung von zweiten Auswahltransistoren der Sensorelemente dienen, daß die zweiten Auswahltransistoren jeweils in Serie zu den ersten Auswahltransistoren angeordnet sind, daß die Zeilenleitungen über Zeilenauswahltransistoren mit den Parallelausgängen des vertikalen Schieberegisters verbunden sind und daß in Serie zum Ausgang der Ausleseleitung eine differenzbildende Stufe vorgesehen ist, die aus zwei unmittelbar nacheinander ausgelesenen Signalen ein Differenzsignal ableitet.

2. Zweidimensionaler Halbleiter-Bildsensor nach Anspruch 1, d a d u r c h  g e k e n n z e i c h n e t , daß die differenzbildende Stufe einen eingangsseitigen Vorverstärker, eine in Serie zu dessen Ausgang liegende Kapazität, einen Schalter, der den vom Verstärkerausgang abgewandten Anschluß der Kapazität mit einem auf Bezugspotential liegenden Schaltungspunkt verbindet, und eine ausgangsseitige Abtast- und Haltestufe aufweist.

3. Zweidimensionaler Halbleiter-Bildsensor nach Anspruch 1

0107790

oder 2, d a d u r c h  g e k e n n z e i c h n e t ,
daß die Zeilenleitungen über erste Schalter mit einem
ersten Schaltungspunkt verbunden sind, der auf Bezugspotential liegt, daß die Spaltenleitungen über zweite Schalter mit einem zweiten Schaltungspunkt verbunden sind, der
auf einem Referenzpotential liegt, und daß die Ausleseleitung über einen dritten Schalter mit einem dritten
Schaltungspunkt verbunden ist, der vorzugsweise ebenfalls
mit diesem Referenzpotential beschaltet ist.

4. Zweidimensionaler Halbleiter-Bildsensor nach einem der
Ansprüche 1 bis 3, d a d u r c h  g e k e n n z e i c h n e t ,  daß der erste und zweite Auswahltransistor (T11,
T11') eines Sensorelements (D11) zu einem Dual-Gate-Transistor zusammengefaßt sind.

5. Verfahren zum Betrieb eines Halbleiter-Bildsensors
nach Anspruch 1, d a d u r c h  g e k e n n z e i c h n e t ,  daß die Zeilenleitung (L1) einer auszulesenden
Sensorzeile über einen Parallelausgang (A1) des vertikalen Schieberegisters ausgewählt wird, wobei jedoch der
zugeordnete Zeilenauswahltransistor (ZT1) noch gesperrt
bleibt, daß die Spaltenauswahlleitung (SPA1) der ersten
Sensorspalte über einen Parallelausgang (B1) des horizontalen Schieberegisters mit einer Spannung beaufschlagt
wird, die den zugehörigen Spaltenauswahltransistor (ST1)
und die zweiten Auswahltransistoren (T11') der Sensorelemente (D11) dieser Spalte leitend schaltet, daß danach
die Rauschspannungsanteile auf der Spaltenleitung und Ausleseleitung und durch die betätigten Schalttransistoren
entstandene Störspannungseinkopplungen in der differenzbildenden Stufe mit einem ersten Vorzeichen gespeichert
werden, daß anschließend der Zeilenauswahltransistor (ZT1)
der ausgewählten Zeilenleitung leitend geschaltet wird,
so daß die ersten Auswahltransistoren (T11) der ausgewählten Sensorzeile leitend geschaltet werden, daß das
Sensorsignal des ersten Sensorelements dieser Sensorzeile einschließlich der genannten Rauschspannungsanteile und Störspannungseinkopplungen in der differenzbildenden Stufe dem zuvor gespeicherten Signal mit einem zweiten Vorzeichen überlagert wird, daß das entstehende Differenzsignal an den Sensorausgang übertragen wird und daß dieser Auslesevorgang sequentiell für alle Sensorelemente der ausgewählten Sensorzeile und sodann in analoger Weise für die weiteren Sensorzeilen durchgeführt wird.

6. Verfahren nach Anspruch 5, d a d u r c h g e - k e n n z e i c h n e t , daß vor dem Anlegen der am Parallelausgang (B1) des horizontalen Schieberegisters (HSR) auftretenden Spannung an die Spaltenauswahlleitung (SPA1) die Zeilenleitungen (L1...Lz) auf Bezugspotential (4) und die Spaltenleitungen (SP1...SPm) sowie die Ausleseleitung (AL) vorzugsweise auf dasselbe Referenzpotential zurückgesetzt werden.

FIG 1

## FIG 2

## FIG 3